# EUROPÄISCHE PATENTSCHRIFT

(11) **EP 2 054 746 B1**
(45) Veröffentlichungstag und Bekanntmachung des Hinweises auf die Patenterteilung: **15.12.2010**
(21) Anmeldenummer: 07802808.1
(22) Anmeldetag: 22.08.2007
(51) Int. Cl.: G02B 6/30

(54) **VERFAHREN ZUM HERSTELLEN EINES OPTISCHEN VERZWEIGERS UND OPTISCHER VERZWEIGER**
METHOD FOR PRODUCING AN OPTICAL SPLITTER AND OPTICAL SPLITTER
PROCEDE DE FABRICATION D'UN DIVISEUR OPTIQUE ET DIVISEUR OPTIQUE

(30) Priorität: 23.08.2006 DE 102006039516
(43) Veröffentlichungstag der Anmeldung: 06.05.2009
(73) Patentinhaber: CCS Technology, Inc., Wilmington, DE 19803 (US)
(72) Erfinder: SCHWEIKER, Wolfgang, 83629 Weyarn (DE); HARTKORN, Klaus, 81243 München (DE); DRAXLER, Franz, 83623 Dietramszell (DE); MEINELT, Markus, 83623 Dietramszell (DE); RIEF, Angela, 85737 München (DE)
(74) Vertreter: Epping - Hermann - Fischer
(86) Internationale Anmeldenummer: PCT/EP2007/058742
(87) Internationale Veröffentlichungsnummer: WO 2008/023037

(56) Entgegenhaltungen:
- EP-A- 0 170 457
- EP-A- 0 583 986
- GB-A- 2 389 916
- JP-A- 4 140 702
- US-A- 5 208 885
- US-A1- 2002 110 328
- MURPHY E J: "FIBER ATTACHMENT FOR GUIDED WAVE DEVICES" JOURNAL OF LIGHTWAVE TECHNOLOGY, IEEE SERVICE CENTER, NEW YORK, NY, US, Bd. 6, Nr. 6, 1. Juni 1988 (1988-06-01), Seiten 862-871, XP000071357 ISSN: 0733-8724
- MORITEX CORPORATION: "V-GROOVES AND OPTICAL FIBER ARRAYS" PRODUCT DESCRIPTION, [Online] Bd. MEL/VG/0600, XP007903428 Gefunden im Internet: URL:http://www.moritexusa.com/files/VGroov esFarrays.pdf> [gefunden am 2007-11-09]

## Beschreibung

Die Erfindung betrifft ein Verfahren zur Herstellung eines optischen Verzweigers, mit dem Licht von einem Lichtwellenleiter, der an einer Eingangsseite des optischen Verzweigers angeordnet ist, auf mehrere Lichtwellenleiter, die an einer Ausgangsseite des optischen Verzweigers angeordnet sind, verteilt wird. Die Erfindung betrifft des weiteren einen optischen Verzweiger, mit dem Licht von einem Lichtwellenleiter, der an einer Eingangsseite des optischen Verzweigers angeordnet ist, auf mehrere Lichtwellenleiter, die an einer Ausgangsseite des optischen Verzweigers angeordnet sind, verteilt wird.

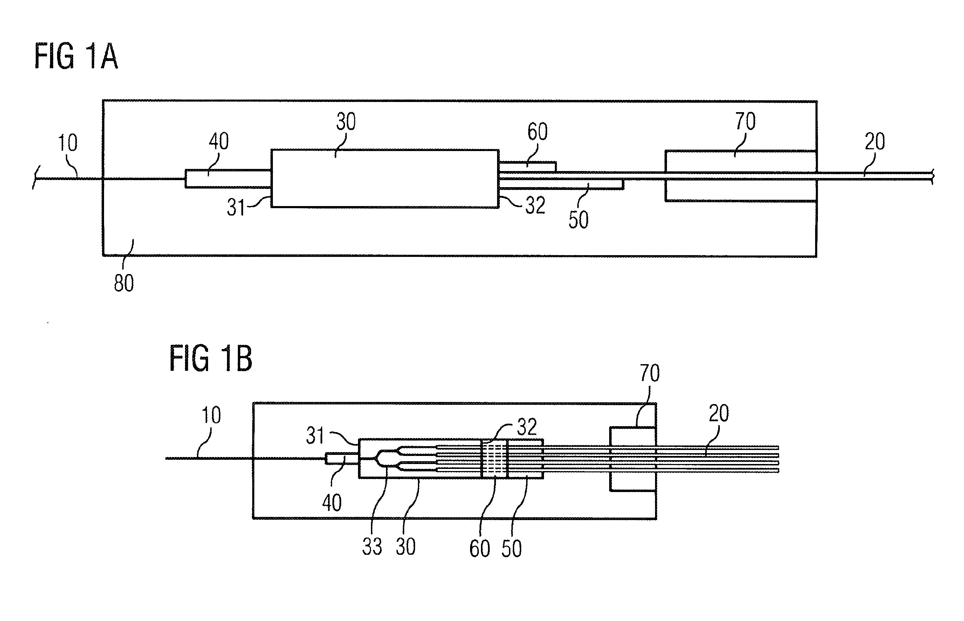

Figur 1A zeigt einen Querschnitt eines optischen Verzweigers. In ein Gehäuse 80 ist an einer Seite ein einzelner Lichtwellenleiter 10 eingeführt. An einer anderen Seite des Gehäuses treten mehrere Lichtwellenleiter 20 nach außen. Mit Hilfe des optischen Verzweigers wird Licht, das dem Verzweiger im Allgemeinen eingangsseitig von dem Lichtwellenleiter 10 zugeführt wird, auf die verschiedenen ausgangsseitig angebrachten Lichtwellenleiter 20 aufgeteilt. Der Verzweiger ist ebenso in der umgekehrten Richtung betreibbar. In diesem Fall ist die Eingangsseite des Verzweigers diejenige Seite, an der die mehreren Lichtwellenleiter 20 angebracht sind, und die Ausgangsseite diejenige Seite, an der der einzelne Lichtwellenleiter 10 angeordnet ist.

Der Lichtwellenleiter 10 ist an seinem Ende mit einer Verstärkungsstruktur umgeben. Dies kann z. B. in Form einer Aderendhülse (ferrule) 40 realisiert werden. Die Aderendhülse ist beispielsweise als ein Glasröhrchen ausgebildet, in das die Faser 10 eingeklebt ist. Die Verstärkungsstruktur kann auch aus zwei Teilen, z. B. einer Grundplatte und einer Deckplatte mit Nut bestehen. Die Verstärkungsstruktur dient als Halteeinheit, die an einer Seite 31 eines optischen Chips 30 befestigt ist. Die Verstärkungsstruktur kann beispielsweise an den optischen Chip 30 angeklebt sein.

Der optische Chip 30 weist ein Trägermaterial, beispielsweise ein Substrat aus Glas oder Silizium auf, auf dem Glasschichten abgeschieden sind. Die Glasschichten sind beispielsweise aus leicht dotiertem Quarzglas ausgebildet und wirken als optische Wellenleiter. Die optischen Wellenleiter können auch durch andere Prozesse, z. B. Diffusion von Dotierionen in das Substratmaterial, hergestellt werden.

Figur 1B zeigt eine Draufsicht auf den in Figur 1A im Querschnitt dargestellten optischen Verzweiger. Die optischen Wellenleiter, die auf dem Trägersubstrat angeordnet sind, bilden eine Leiterbahn, die mehrere Verzweigungsknoten aufweist. Licht, das beispielsweise von dem Lichtwellenleiter 10 an der Seite 31 des optischen Chips 30 in einen Leiterbahnabschnitt der Leiterbahn 33 eingespeist wird, wird hinter den Verzweigungsknoten auf mehrere Leiterbahnabschnitte der Leiterbahn verteilt.

An einer Seite 32 des optischen Chips ist ein sogenanntes Faser-Array an dem Chip befestigt. Das Faser-Array weist ein Trägersubstrat 50 und ein V-Nuten-Plättchen 60 auf. Die Lichtwellenleiter 20 sind auf einer Oberseite des Trägersubstrats 50 fixiert. Sie sind in Nuten des V-Nuten-Plättchens 60 geführt und sind somit auf die an der Seite 32 des optischen Chips angeordneten Leiterbahnabschnitte der Leiterbahn 33 ausgerichtet. Die Lichtwellenleiter 20 werden durch ein Zugentlastungselement 70, das an einer Seite des Gehäuses 90 angeordnet ist, vor Zugbelastung und somit vor einem Abreißen von dem Faser-Array geschützt. Das Zugentlastungselement kann beispielsweise als eine Gummimanschette ausgebildet sein.

Die Herstellung eines optischen Verzweigers, wie er in den Figuren 1A und 1B dargestellt ist, ist aufwändig. So müssen beispielsweise die Faserenden der Lichtwellenleiter 20 zunächst gereinigt werden, in den Nuten des V-Nuten Plättchens angeordnet werden, und auf das Trägersubstrat aufgeklebt werden. Des weiteren wird das Faserende des Lichtwellenleiters 10 in die Verstärkungsstruktur 40 eingegossen. Insbesondere das Faser-Array, das an den optischen Chip angeklebt wird, um die einzelnen Lichtwellenleiter der mehreren Lichtwellenleiter 20 auf die Leiterbahnabschnitte der optischen Leiterbahn 33 an der Ausgangsseite 32 des Chips auszurichten, ist sehr kostenintensiv.

Die Druckschrift US 5,208,885 betrifft ein Verfahren zur Verbindung eines Lichtwellenleiters mit einem Wellenleiter, der auf einem Substrat angeordnet ist. Der Lichtwellenleiter wird an einem Ende mit einer Glas enthaltenden Paste beschichtet, auf den Wellenleiter ausgerichtet und kann nach Erhitzen der Paste mit dem Wellenleiter verbunden werden.

Es ist wünschenswert, dass zur Herstellung eines optischen Verzweigers Lichtwellenleiter auf einfache und zuverlässige Weise an einem optischen Chip befestigt werden können.

Gemäß dem erfindungsgemäßen Verfahren zur Herstellung eines optischen Verzweigers nach Anspruch 1 wird ein Chip mit einem Trägersubstrat bereitgestellt, auf dem mindestens eine optische Leiterbahn angeordnet ist, die mehrere Leiterbahnabschnitte umfasst, wobei sich ein erster der Leiterbahnabschnitte von einer ersten Seite des Chips an mindestens einem Verzweigungsort der Leiterbahn in mindestens zwei zweite Leiterbahnabschnitte verzweigt, die zu einer zweiten Seite des Chips verlaufen. Ein Lichtwellenleiterabschnitt eines ersten Lichtwellenleiters wird an den ersten Leiterbahnabschnitt der Leiterbahn an der ersten Seite des Chips angeklebt, wobei der Lichtwellenleiterabschnitt des ersten Lichtwellenleiters nach dem Ankleben nicht auf einem Trägersubstrat angeordnet ist und/oder eine Anzahl von jeweiligen Lichtwellenleiterabschnitten von zweiten Lichtwellenleitern wird an jeweils einen der zweiten Leiterbahnabschnitte an der zweiten Seite des Chips angeklebt, wobei die Lichtwellenleiterabschnitte der zweiten Lichtwellenleiter nach dem Ankleben nicht auf einem Trägersubstrat angeordnet sind.

Das Trägersubstrat kann ein Substratmaterial umfassen, das zur Unterstützung der Lichtwellenleiter in einer Längsrichtung der Lichtwellenleiter angeordnet ist. Bei dem Verfahren wird somit ein Lichtwellenleiterabschnitt eines ersten Lichtwellenleiters direkt an den ersten Leiterbahnabschnitt der Leiterbahn an der ersten Seite des Chips angeklebt. Der Lichtwellenleiterabschnitt des ersten Lichtwellenleiters ist somit nicht mehr in die Verstärkungsstruktur (ferrule) eingegossen. Ebenso können auch jeweilige Lichtwellenleiterabschnitte von zweiten Lichtwellenleitern direkt an der zweiten Seite des Chips an jeweils einen der zweiten Leiterbahnabschnitte angeklebt werden. Die Lichtwellenleiterabschnitte der zweiten Lichtwellenleiter brauchen somit nicht mehr auf einem Trägersubstrat, das beispielsweise als Bestandteil eines Faser-Arrays ausgebildet sein kann, angeordnet zu werden und mit dem Faser-Array an den Chip angeklebt zu werden. Da insbesondere das Faser-Array einen nicht unerhebliche Kostenfaktor darstellt, und das Ankleben der Lichtwellenleiterabschnitte der zweiten Lichtwellenleiter auf dem Faser-Array einen aufwendigen Produktionsschritt darstellt, wird mit dem angegebenen Verfahren die Ankopplung der zweiten Lichtwellenleiter an den Chip vereinfacht.

Gemäß dem Verfahren wird nach dem Ankleben der jeweiligen Lichtwellenleiterabschnitte der Lichtwellenleiter an die jeweiligen Leiterbahnabschnitte der Leiterbahn eine erste Glasplatte unter den jeweiligen Lichtwellenleiterabschnitten der Lichtwellenleiter angeordnet die an die erste und/oder zweite Seite des Chips angeklebt wird.

Die erste und/oder zweite Glasplatte weist an ihren jeweiligen Stirnflächen, an denen sie an die erste und/oder zweite Seite des Chips geklebt ist, jeweils eine Aussparung auf. Das Klebermaterial ist in der jeweiligen Aussparung der ersten und/oder zweiten Glasplatte angeordnet.

Gemäß einer möglichen Ausführungsform des Verfahrens können jeweilige Stirnflächen der Lichtwellenleiterabschnitte des ersten Lichtwellenleiters und/oder jeweilige Stirnflächen der zweiten Lichtwellenleiter mittels eines Klebermaterials an jeweiligen Stirnflächen der Leiterbahnabschnitte der Leiterbahn an der ersten und/oder zweiten Seite des Chips angeklebt werden.

Bei einer weiteren Ausführungsform des Verfahrens kann eine erste Schicht des Klebermaterials seitlich zu den jeweiligen Stirnflächen der Lichtwellenleiterabschnitte an der ersten und/oder zweiten Seite des Chips angebracht werden. Als erste Schicht des Klebermaterials kann eine Schicht angebracht werden, die ein Acrylat enthält. Es kann als erste Schicht des Klebermaterials auch eine Schicht angebracht werden, die ein Epoxid enthält. Das angebrachte Klebermaterial aus Acrylat oder Epoxid wird beispielsweise mittels UV-Strahlung ausgehärtet.

Bei einer anderen möglichen Ausführungsform des Verfahrens ist vorgesehen, dass eine zweite Schicht des Klebermaterials über der ersten Schicht angebracht wird. Dabei wird beispielsweise als zweite Schicht des Klebermaterials eine Schicht angebracht, die einen niedrigeren thermischen Ausdehnungskoeffizienten als die erste Schicht aufweist. Als zweite Schicht wird zum Beispiel ein mit Glas gefülltes Klebermaterial angebracht.

Gemäß eines weiteren Merkmals des Verfahrens wird beispielsweise nach dem Ankleben der jeweiligen Lichtwellenleiterabschnitte der Lichtwellenleiter an die jeweiligen Leiterbahnabschnitte der Leiterbahn eine zweite Glasplatte über den jeweiligen Lichtwellenleiterabschnitten der Lichtwellenleiter angeordnet, die an die erste und/oder zweite Seite des Chips angeklebt wird.

Die jeweiligen Lichtwellenleiterabschnitte der Lichtwellenleiter können vor dem Ankleben an die jeweiligen Leiterbahnabschnitte der Leiterbahn in Nuten einer Haltevorrichtung angeordnet werden und mittels der Haltevorrichtung auf die jeweiligen Leiterbahnabschnitte an der ersten und/oder zweiten Seite des Chips ausgerichtet werden.

Die jeweiligen Lichtwellenleiterabschnitte der Lichtwellenleiter werden beispielsweise unter einem Winkel von kleiner als 15°, beispielsweise von 8°, angeschnitten.

Gemäß eines weiteren Merkmals des Verfahrens wird vor dem Ankleben der Lichtwellenleiterabschnitte der Lichtwellenleiter an jeweilige Leiterbahnabschnitte der Leiterbahn eine Umhüllung der Lichtwellenleiter im Bereich der jeweiligen Lichtwellenleiterabschnitte der Lichtwellenleiter entfernt.

Im Folgenden werden mögliche Ausführungsformen eines erfindungsgemäßen optischen Verzweigers angegeben, der in Anspruch 8 definiert ist. Der optische Verzweiger umfasst einen Chip, der ein Trägersubstrat enthält, auf dem mindestens eine optische Leiterbahn angeordnet ist, die mehrere Leiterbahnabschnitte umfasst, wobei sich ein erster der Leiterbahnabschnitte von einer ersten Seite des Chips an mindestens einem Verzweigungsort der Leiterbahn in mindestens zwei zweite Leiterbahnabschnitte verzweigt, die zu einer zweiten Seite des Chips verlaufen. Ein Lichtwellenleiterabschnitt eines ersten Lichtwellenleiters ist an den ersten Leiterbahnabschnitt der Leiterbahn an der ersten Seite des Chips angeklebt, wobei der Lichtwellenleiterabschnitt des ersten Lichtwellenleiters nicht auf einem Trägersubstrat angeordnet ist. Eine Anzahl von jeweiligen Lichtwellenleiterabschnitten von zweiten Lichtwellenleitern sind an die Leiterbahnabschnitte an der zweiten Seite des Chips angeklebt, wobei die Lichtwellenleiterabschnitte der zweiten Lichtwellenleiter nicht auf eine Trägersubstrat angeordnet sind.

An die erste und/oder zweite Seite des Chips ist eine erste Glasplatte angeklebt, die unter den jeweiligen Lichtwellenleiterabschnitten des ersten Lichtwellenleiters und/oder der zweiten Lichtwellenleiter angeordnet ist.

Die erste und/oder zweite Glasplatte weist an ihren jeweiligen Stirnflächen, an denen sie an die erste und/oder zweite Seite des Chips geklebt ist, jeweils eine Aussparung auf. Das Klebermaterial ist in der jeweiligen Aussparung der ersten und/oder zweiten Glasplatte angeordnet.

Gemäß einer Ausführungsform des optischen Verzweigers kann eine erste Schicht eines Klebermaterials an jeweiligen Stirnflächen der Lichtwellenleiterabschnitte angeordnet sein. Die erste Schicht des Klebermaterials kann auch seitlich zu den jeweiligen Stirnflächen angeordnet sein. In einer möglichen Ausführungsform kann die erste Schicht des Klebermaterials ein Acrylat oder ein Epoxid enthalten.

Gemäß einem weiteren Merkmal des optischen Verzweigers ist beispielsweise eine zweite Schicht des Klebermaterials über der ersten Schicht des Klebermaterials angeordnet. Bei einer möglichen Ausführungsform ist das Klebermaterial der zweiten Schicht beispielsweise mit Glas gefüllt.

Bei einer anderen Ausführungsform des optischen Verzweigers kann eine Fläche an der ersten und/oder zweiten Seite des Chips und die jeweiligen Stirnflächen der Lichtwellenleiterabschnitte eine Neigung von weniger als 15°, beispielsweise von 8°, auf.

Der Chip und die jeweiligen Lichtwellenleiterabschnitte der Lichtwellenleiter können von einem Gehäuse umgeben sein.

Gemäß einer weiteren Ausführungsform des optischen Verzweigers kann an die erste und/oder zweite Seite des Chips eine zweite Glasplatte angeklebt sein, die über den jeweiligen Lichtwellenleiterabschnitten des ersten Lichtwellenleiters und/oder der zweiten Lichtwellenleiter angeordnet ist.

Gemäß einer anderen möglichen Ausführungsform des optischen Verzweigers kann eine Fläche an der ersten und/oder zweiten Seite des Chips und die erste und/oder zweite Glasplatte eine Neigung von weniger als 15°, beispielsweise von 8°, aufweisen.

Des weiteren kann der Chip und die jeweiligen Lichtwellenleiterabschnitte der Lichtwellenleiter von einem Gehäuse umgeben sein.

Die Erfindung wird im Folgenden anhand von Figuren, die Ausführungsbeispiele der vorliegenden Erfindung zeigen, näher erläutert. Es zeigen:
Figur 1A einen Querschnitt eines bekannten optischen Verzweigers,
Figur 1B eine Draufsicht auf eine Ausführungsform eines bekannten optischen Verzweigers,
Figur 2 eine Draufsicht auf eine Ausführungsform eines optischen Verzweigers gemäß der Erfindung,
Figur 3 einen Querschnitt durch einen Lichtwellenleiter,
Figur 4 eine Haltevorrichtung zur Ausrichtung von Lichtwellenleiterabschnitten auf Leiterbahnabschnitte eines optischen Chips,
Figur 5 einen Querschnitt durch eine weitere Ausführungsform eines optischen Verzweigers gemäß der Erfindung,
Figur 6 einen Querschnitt durch eine vorgleichende Ausführungsform eines optischen Verzweigers,
Figur 7 einen Querschnitt durch eine weitere Ausführungsform eines optischen Verzweigers gemäß der Erfindung.

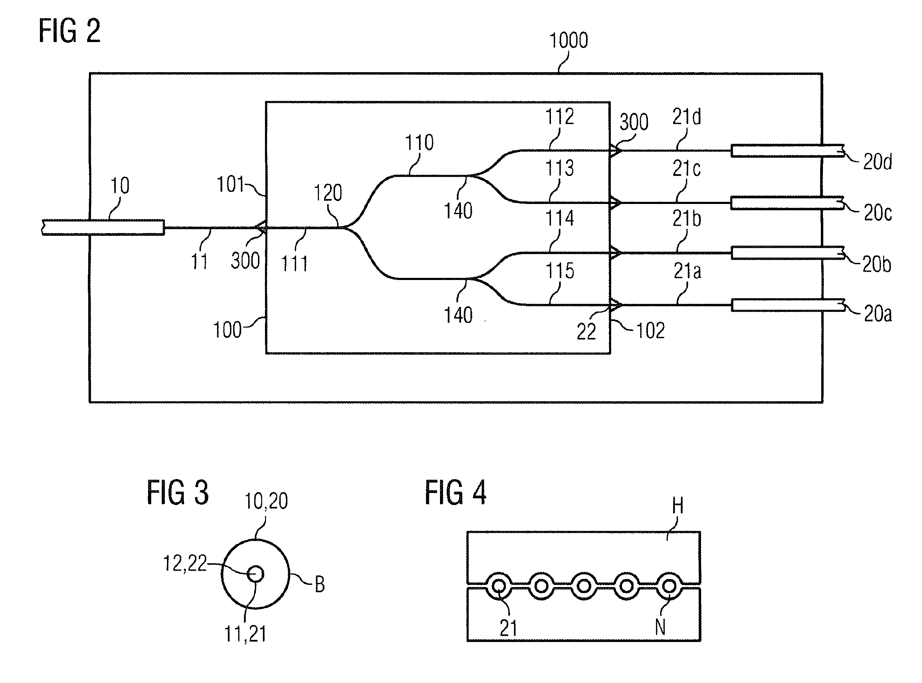

Figur 2 zeigt eine Draufsicht auf einen optischen Chip 100, auf dem eine Leiterbahn 110, die mehrere Leiterbahnabschnitte 111, 112, ..., 115 aufweist, aufgebracht ist. Zum Anbringen der Leiterbahn 110 werden auf einem Trägermaterial, das beispielsweise aus Silizium oder reinem Quarzglas gebildet wird, Leiterbahnen aus leicht dotiertem Quarzglas abgeschieden. Ein Leiterbahnabschnitt 111 verzweigt sich ausgehend von einer Seite 101 des Chips 100 an einem Verzweigungsort 120 und weiteren Verzweigungsorten 130, 140 in Leiterbahnabschnitte 112, 113, 114 und 115, die zu einer Seite 102 des Chips verlaufen. Der optische Chip dient im Allgemeinen dazu Licht, das auf der Seite 101 des Chips in den Leiterbahnabschnitt 111 eingespeist wird, auf mehrere Lichtwellenleiter zu verteilen, die an der Seite 102 des Chips anzubringen sind. Ebenso kann auch das Licht von den Lichtwellenleitern, die an der Seite 102 angeordnet sind, über die Leiterbahn 110 in den einzelnen Lichtwellenleiter 11 auf der Seite 101 eingespeist werden.

Im Gegensatz zu der in den Figuren 1A und 1B gezeigten Ausführungsform eines bekannter optischen Verzweigers sind bei der in Figur 2 dargestellten Ausführungsform der Lichtwellenleiter 10 und die mehreren Lichtwellenleiter 20 direkt an die beiden Seiten des Chips angeklebt. Der Lichtwellenleiter 10 ist somit nicht mehr von der Aderendhülse 40 umgeben. Ebenso sind die mehreren Lichtwellenleiter 20 nach dem Ankleben nicht auf dem in Längsrichtung der Lichtwellenleiter angeordneten Trägersubstrat 50 gehalten beziehungsweise werden nicht mehr in Nuten des V-Nuten-Plättchens 60 geführt, das bei der Ausführungsform der Figuren 1A und 1B mit dem Trägersubstrat verklebt ist.

Figur 3 zeigt einen Querschnitt durch einen der Lichtwellenleiter 10 beziehungsweise 20. Die Lichtwellenleiter weisen jeweils in ihrem Zentrum einen Kern 11, 21 auf, in dem Licht geführt wird. Der Kern 11 beziehungsweise 21 ist von einem Mantelmaterial mit niedrigerem Brechungsindex als der Kern und von einer äußeren Beschichtung B umgeben. Nach dem Entfernen der äußeren Beschichtung B werden der Lichtwellenleiterabschnitt 11, der den Kernbereich des Lichtwellenleiters 10 darstellt, an der Seite 101 des Chips 30 angebracht und/oder die Lichtwellenleiterabschnitte 21, die die Kernbereiche der Lichtwellenleiter 20 darstellen, an die Seite 102 des optischen Chips angeklebt.

Um die Lichtwellenleiterabschnitte 11 und/oder 21 auf die Leiterbahnabschnitte 111 und/oder 112, ..., 115 des optischen Chips auszurichten, werden die Lichtwellenleiterabschnitte zunächst in einer Haltevorrichtung angeordnet. Figur 4 zeigt eine Haltevorrichtung H zur Ausrichtung der Lichtwellenleiterabschnitte, beispielsweise zur Ausrichtung der Lichtwellenleiterabschnitte 21a, ..., 21d auf die Leiterbahnabschnitte 112, ..., 115 der Leiterbahn 110. Die Haltevorrichtung umfasst mehrere Aussparungen N, in denen die Lichtwellenleiterabschnitte 21a, ..., 21d angeordnet sind. An der Seite 101, in einem Bereich, an dem der Leiterbahnabschnitt 111 angeordnet ist, und/oder an der Seite 102, in Bereichen, an denen die Leiterbahnabschnitte 112, ..., 115 angeordnet sind, wird ein Klebermaterial 300 angebracht. Das Klebermaterial 300 kann beispielsweise ein UV-aushärtendes Acrylat oder ein UV-aushärtendes Epoxid sein. Die gesamte Anordnung kann zum Schutz vor einem Abreißen der Lichtwellenleiterabschnitte 11 und 21a, ..., 21d von einem Gehäuse 1000 umgeben sein.

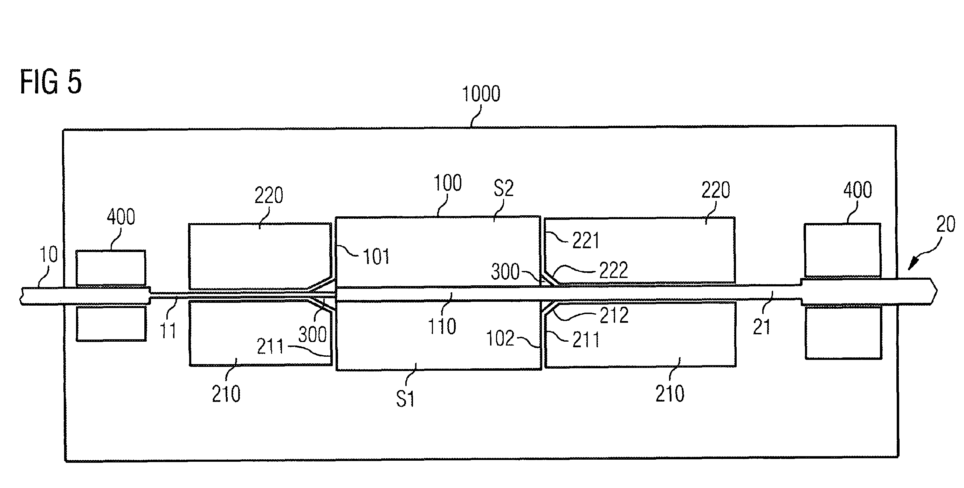

Figur 5 zeigt einen Querschnitt durch eine Ausführungsform eines optischen Verzweigers. Der optische Chip 100 ist als ein Mehrlagensubstrat ausgebildet und weist eine Trägerschicht S1 auf, auf der Glasschichten 110 als eine optische Leiterbahn abgeschieden sind. Die Trägerschicht S1 kann als reines Quarzglas oder als ein Siliziumsubstrat ausgebildet sein. Die Leiterbahnabschnitte der Leiterbahn 110 sind von einer Schutzschicht (Cladding) umgeben, das von einer Deckplatte S2, die auf der Trägerschicht S1 aufgeklebt ist, zusätzlich geschützt ist. An die Seite 101 ist mittels des Klebermaterials 300 der Lichtwellenleiterabschnitt 11 des Lichtwellenleiters 10 angeklebt. An die Seite 102 des Chips sind die Lichtwellenleiterabschnitte 21a, ..., 21d der Lichtwellenleiter 20 angeklebt.

Nach dem Ankleben der Fasern wird gemäß der in Figur 5 gezeigten Ausführungsform eine Glasplatte 210 unterhalb der Lichtwellenleiterabschnitte 11 und/oder 21 positioniert. Die Glasplatte 210 wird an ihrer Seitenfläche 211 an die Seite 101 und/oder die Seite 102 des optischen Chips 100 angeklebt. Danach wird eine weitere Glasplatte 220 oberhalb der Lichtwellenleiterabschnitte 11 und/oder 21 angeordnet und mit ihren jeweiligen Seitenflächen 221 an die Seite 101 und/oder die Seite 102 des optischen Chips 100 angeklebt.

Beispielsweise werden Glasplatten 210 und 220 an die Seitenflächen an der Ausgangsseite 102 des optischen Chips angeklebt. Die Glasplatten bieten einen Schutz, damit die Fasern nicht von den Seitenflächen des Chips 100 abreißen. Somit entfällt das Anordnen der Lichtwellenleiterabschnitte in einem Faser-Array und das Ankleben des Faser-Arrays an die Seite 102 des Chips. Der Lichtwellenleiterabschnitt 11 kann weiterhin mittels einer Aderendhülse an der Seite 101 des Chips fixiert sein. Er kann aber ebenfalls, wie in Figur 5 gezeigt, direkt an die Seite des Chips angeklebt werden und mit den beiden Glasplatten 210 und 220 vor einem Abreißen geschützt werden.

Die Glasplatten 210 beziehungsweise 220 weisen jeweils Aussparungen 212 beziehungsweise 222 auf. Die Aussparungen bieten Platz, damit sich das Klebermaterial 300 kegelförmig ausformen kann. Dadurch verläuft das Klebermaterial seitlich zu den Lichtwellenleiterabschnitten 11 beziehungsweise 21 und bietet somit einen guten Halt. Zum weiteren Schutz ist die gesamte Anordnung in einem Gehäuse 1000 aus einem Kunststoff- oder Metallmaterial eingebettet. Als weiterer Schutz vor Zugbelastung ist der Lichtwellenleiter 10 und die Lichtwellenleiter 20 von einer Verstärkung 400, beispielsweise einer Manschette aus einem Material aus einem Gummi, umgeben.

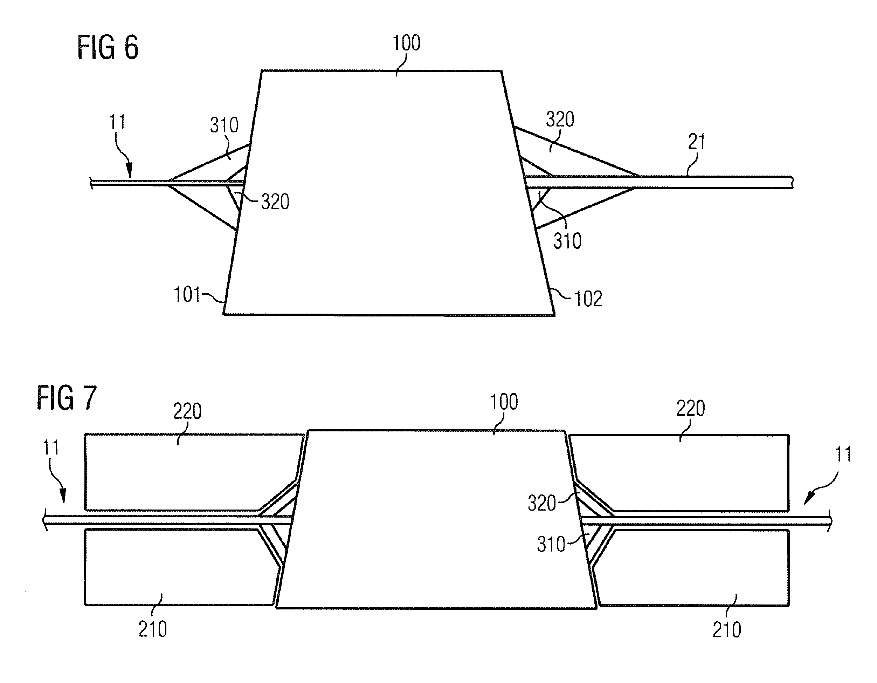

Figur 6 zeigt eine vergleichende Ausführungsform eines optischen Verzweigers. Die Lichtwellenleiterabschnitte 11 und/oder 21 sind an einer Seite 101 und/oder einer Seite 102 an den optischen Chip 100 angeklebt. Das Klebermaterial 300 weist zwei Schichten 310 und 320 auf. Die Schicht 310 ist beispielsweise als ein UV-aushärtendes Acrylat oder als ein UV-aushärtendes Epoxid ausgebildet. Das Klebermaterial der Schicht 320 weist einen niedrigeren thermischen Ausdehnungskoeffizient als das Klebermaterial der Schicht 310 auf. Als Klebermaterial für die Schicht 320 lässt sich beispielsweise ein mit Glas hochgefüllter Klebstoff verwenden. Dadurch hat die Schicht 320 einen niedrigeren thermischen Ausdehnungsfaktor als die Schicht 310 und ist an den Ausdehnungsfaktor der Glasschichten des optischen Chips 100 angepasst. Somit wird verhindert, dass bei Erwärmung oder Abkühlung des optischen Verzweigers die Lichtwellenleiterabschnitte 11 beziehungsweise 21 von dem Chip abreißen.

Des weiteren sind bei der in Figur 6 gezeigten Ausführungsform des optischen Verzweigers die Seite 101 und die Seite 102 in einem Winkel, der kleiner als 15° ist und zum Beispiel 8° beträgt, angeschnitten. Dadurch werden Rückreflektionen am Übergang zwischen Glas und Klebstoff vermieden. Somit wird verhindert, dass Licht, nach einer Reflektion in den Lichtwellenleiter 10 und die Lichtwellenleiter 20 zurück gekoppelt wird und einen Sender oder Empfänger stört. Ebenso müssen auch die Fasern 11 und 21 in einem entsprechenden Winkel geschnitten werden. Zum Schneiden der Lichtwellenleiterabschnitte 11 und 21 in dem Winkel wird beispielsweise ein Laser verwendet.

Figur 7 zeigt eine weitere Ausführungsform eines optischen Verzweigers. Bei dieser Ausführungsform weist der optische Chip abgeschrägte Eingangs- und Ausgangsseitenflächen auf, die in einem Winkel kleiner als 15°, beispielsweise in einem Winkel von 8°, geschnitten sind. Die Lichtwellenleiterabschnitte 11 und 21 sind durch ein Klebermaterial 300 an der Eingangs- und Ausgangsseite des optischen Chips befestigt. Die Fasern 11 und 21 sind des weiteren zwischen zwei Glasplatten 210 und 220 angeordnet, die als zusätzlicher Schutz wirken. Die Glasplatten weisen jeweils an ihren Stirnflächen Aussparungen auf, in denen das Klebermaterial angeordnet ist.

Das beschriebene Verfahren, bei dem Faserenden von Lichtwellenleitern direkt an einen optischen Verzweiger angeklebt werden, lässt sich bei allen Vorrichtungen anwenden, bei denen ein Lichtwellenleiterabschnitt eines Lichtwellenleiters an einem optischen Chip fixiert werden muss. Derartige Anordnung treten beispielsweise bei einem AWG (Arrayed Waveguide Grating Chip) oder einem planaren VOA (Variable Optical Attenuator) auf.

Das AWG ist ein Multiplexer/Demultiplexer für Wellenlängenmultiplex. Wie bei einem Splitter wird auch bei AWGs das Licht einer Eingangsfaser auf mehrer Ausgangsfasern verteilt oder umgekehrt. Allerdings wird im Gegensatz zum Splitter auf eine bestimmte Ausgangsfaser nur Licht mit einer bestimmten Wellenlänge transmittiert, so dass das Licht wellenlängenabhängig aufgespalten wird. Typische Konfigurationen sind 32 Kanal, 40 Kanal, 64 Kanal, 80 Kanal AWGs. Bei VOA Arrays wird das Licht jeweils einer Eingangsfaser variabel abgeschwächt auf die korrespondierende Ausgangsfaser transmittiert. Typische Konfigurationen sind 8 Kanal oder 16 Kanal VOA Arrays.

Des Weiteren lässt sich das Verfahren bzw. der optische Verzweiger auch bei hybriden Anwendungen oder planaren Splittern, die typischerweise ein Splitterverhältnissen von 1x4, 1x8, 1x16, 1x32, 1x64, 2x8, 2x16, 2x32, 2x64, 2-1x16 aufweisen, anwenden. Bei hybriden Anwendungen kommen integrierte optische Bauelemente zum Einsatz, bei denen mehrere optische Funktionalitäten (z.B. Splitter, AWG, VOA, Monitor Dioden) auf einem optischen Chip (PLC - Planar Lightwave Circuit) integriert sind. Mögliche Ausführungsformen sind V-MUX oder O-ADM-Bauelemente. Bei einem V-MUX-Bauelement sind ein AWG mit einem VOA Array auf einem optischen Chip integriert. Die AWG Funktionalität wird hierbei um die Möglichkeit erweitert, jeden Kanal einzeln abschwächen zu können. Bei einem OADM-Bauelement (Optical Add-Drop Multiplexer) werden AWGs mit optischen Schaltern integriert.

## Patentansprüche

1. Verfahren zur Herstellung eines optischen Verzweigers, umfassend die folgenden Schritte:
- Bereitstellen eines Chips (100) mit einem Trägersubstrat (S1), auf dem mindestens eine optische Leiterbahn (110) angeordnet ist, die mehrere Leiterbahnabschnitte (111, 112, ..., 115) umfasst, wobei sich ein erster der Leiterbahnabschnitte (111) von einer ersten Seite (101) des Chips an mindestens einem Verzweigungsort (120, 130, 140) der Leiterbahn in mindestens zwei zweite Leiterbahnabschnitte (112, ..., 115) verzweigt, die zu einer zweiten Seite (102) des Chips verlaufen,
- Ankleben eines Lichtwellenleiterabschnitts (11) eines ersten Lichtwellenleiters (10) an den ersten Leiterbahnabschnitt (111) der Leiterbahn (110) an der ersten Seite (101) des Chips, wobei der Lichtwellenleiterabschnitt (11) des ersten Lichtwellenleiters nach dem Ankleben nicht auf einem Trägersubstrat (50) angeordnet ist und/oder
- Ankleben einer Anzahl von jeweiligen Lichtwellenleiterabschnitten (21a, ..., 21d) von zweiten Lichtwellenleitern (20a, ..., 20d) an jeweils einen der zweiten Leiterbahnabschnitte an der zweiten Seite (102) des Chips, wobei die Lichtwellenleiterabschnitte (21a, ..., 21d) der zweiten Lichtwellenleiter nach dem Ankleben nicht auf einem Trägersubstrat angeordnet sind,
- Anordnen einer Glasplatte (210) unter den jeweiligen Lichtwellenleiterabschnitten der Lichtwellenleiter nach dem Ankleben der jeweiligen Lichtwellenleiterabschnitte (11, 21a, ..., 21d) der Lichtwellenleiter an die jeweiligen Leiterbahnabschnitte (111, 112, ..., 115) der Leiterbahn, wobei die Glasplatte (210) an einer Stirnfläche (211) eine Aussparung (212) aufweist und die Glasplatte mit der Stirnfläche (211) derart an die erste und/oder zweite Seite (101, 102) des Chips angeklebt wird, dass das Klebermaterial (300) in der Aussparung der Glasplatte angeordnet ist.

2. Verfahren nach Anspruch 1, umfassend:
- Ankleben jeweiliger Stirnflächen (12, 22) der Lichtwellenleiterabschnitte des ersten Lichtwellenleiters (10) und/oder der zweiten Lichtwellenleiter (20a, ..., 20d) mittels eines Klebermaterials (300) an die jeweiligen Leiterbahnabschnitte (111, 112, ..., 115) der Leiterbahn (110) an der ersten und/oder zweiten Seite (101, 102) des Chips,
- Anbringen einer ersten Schicht (310) des Klebermaterials seitlich zu den jeweiligen Stirnflächen (12, 22) der Lichtwellenleiterabschnitte an der ersten und/oder zweiten Seite des Chips,
- Anbringen einer zweiten Schicht (320) des Klebermaterials über der ersten Schicht (310).

3. Verfahren nach Anspruch 2,
wobei als erste Schicht des Klebermaterials eine Schicht angebracht wird, die ein Acrylat (310) oder ein Epoxid (310) enthält.

4. Verfahren nach einem der Ansprüche 2 oder 3,
wobei als zweite Schicht (320) des Klebermaterials eine Schicht angebracht wird, die einen niedrigeren thermischen Ausdehnungskoeffizient als die erste Schicht (310) aufweist.

5. Verfahren nach Anspruch 4,
wobei als zweite Schicht ein mit Glas gefülltes Klebermaterial (320) angebracht wird.

6. Verfahren nach einem der Ansprüche 1 bis 5, umfassend: Anschneiden der jeweiligen Lichtwellenleiterabschnitte (11, 21a, ..., 21d) der Lichtwellenleiter unter einem Winkel von kleiner als 15°.

7. Verfahren nach einem der Ansprüche 1 bis 6, umfassend: Anordnen einer weiteren Glasplatte (220) über den jeweiligen Lichtwellenleiterabschnitten der Lichtwellenleiter nach dem Ankleben der jeweiligen Lichtwellenleiterabschnitte (11, 21a, ..., 21d) der Lichtwellenleiter an die jeweiligen Leiterbahnabschnitte der Leiterbahn, wobei die weitere Glasplatte (220) an die erste und/oder zweite Seite (101, 102) des Chips angeklebt wird, wobei die weitere Glasplatte (220) an einer Stirnfläche (221) eine Aussparung (222) aufweist und die weitere Glasplatte mit der Stirnfläche (221) derart an die erste und/oder zweite Seite (101, 102) des Chips angeklebt wird, dass das Klebermaterial (300) in der Aussparung der weiteren Glasplatte angeordnet ist.

8. Optischer Verzweiger, umfassend:
- einen Chip (100), der ein Trägersubstrat (S1) enthält, auf dem mindestens eine optische Leiterbahn (110) angeordnet ist, die mehrere Leiterbahnabschnitte (111, 112, ..., 115) umfasst, wobei sich ein erster der Leiterbahnabschnitte (111) von einer Seite (101) des Chips an mindestens einem Verzweigungsort (120, 130, 140) der Leiterbahn in mindestens zwei zweite Leiterbahnabschnitte (112, ..., 115) verzweigt, die zu einer zweiten Seite (102) des Chips verlaufen,
- wobei ein Lichtwellenleiterabschnitt (11) eines ersten Lichtwellenleiters (10) an den ersten Leiterbahnabschnitt (111) der Leiterbahn (110) an der ersten Seite (101) des Chips angeklebt ist, und/oder wobei eine Anzahl von jeweiligen Lichtwellenleiterabschnitten (21a, ..., 21d) von zweiten Lichtwellenleitern (20a, ..., 20d) an die Leiterbahnabschnitte (112, ..., 115) an der zweiten Seite (102) des Chips angeklebt sind,
**dadurch gekennzeichnet dass** an die erste und/oder zweite Seite (101, 102) des Chips (100) eine Glasplatte (210) mit einem Klebermaterial (300) angeklebt ist, die unter den jeweiligen Lichtwellenleiterabschnitten (11, 21a, ..., 21d) des ersten Lichtwellenleiters und/oder der zweiten Lichtwellenleiter angeordnet ist,
- wobei die Glasplatte (210) an ihrer Stirnfläche (211), an der sie an die erste und/oder zweite Seite des Chips geklebt ist, eine Aussparung (212) aufweist,
- wobei das Klebermaterial (300) in der Aussparung (212) der Glasplatte (210) angeordnet ist.

9. Optischer Verzweiger nach Anspruch 8,
wobei an die erste und/oder zweite Seite (101, 102) des Chips eine weitere Glasplatte (220) angeklebt ist, die über den jeweiligen Lichtwellenleiterabschnitten (11, 21a, ..., 21d) des ersten Lichtwellenleiters und/oder der zweiten Lichtwellenleiter angeordnet ist.

10. Optischer Verzweiger nach Anspruch 9,
- wobei die weitere Glasplatte (220) an ihrer Stirnfläche (221), an der sie an die erste und/oder zweite Seite des Chips geklebt ist, jeweils eine Aussparung (222) aufweist,
- wobei das Klebermaterial (300) in der Aussparung (222) der weiteren Glasplatte angeordnet ist.

11. Optischer Verzweiger nach einem der Ansprüche 9 oder 10, wobei eine Fläche an der ersten und/oder zweiten Seite (101, 102) des Chips (100) und die erste und/oder zweite Glasplatte (210, 220) eine Neigung von weniger als 15° aufweisen.

12. Optischer Verzweiger nach einem der Ansprüche 8 bis 11,
- wobei eine erste Schicht (310) des Klebermaterials an jeweiligen Stirnflächen (12, 22) der Lichtwellenleiterabschnitte (11, 21a, ..., 21d) angeordnet ist,
- wobei die erste Schicht (310) des Klebermaterials seitlich zu den jeweiligen Stirnflächen (12, 22) angeordnet ist,
- wobei eine zweite Schicht (320) des Klebermaterials über der ersten Schicht (310) des Klebermaterials angeordnet ist,
- wobei die zweite Schicht des Klebermaterials einen niedrigeren thermischen Ausdehnungskoeffizient als die erste Schicht aufweist.

13. Optischer Verzweiger nach Anspruch 12,
wobei die erste Schicht des Klebermaterials ein Acrylat (310) oder ein Epoxid (310) enthält.

14. Optischer Verzweiger nach einem der Ansprüche 12 oder 13, wobei das Klebermaterial der zweiten Schicht (320) mit Glas gefüllt ist.

15. Optischer Verzweiger nach einem der Ansprüche 8 bis 14, wobei eine Fläche an der ersten und/oder zweiten Seite (101, 102) des Chips und die jeweiligen Stirnflächen der Lichtwellenleiterabschnitte eine Neigung von weniger als 15° aufweisen.

## Claims

1. A method for producing an optical splitter, comprising the following steps:
- providing a chip (100) having a carrier substrate (S1), on which is arranged at least one optical conductor track (110) comprising a plurality of conductor track sections (111, 112, ..., 115), wherein a first one of the conductor track sections (111) branches from a first side (101) of the chip at at least one branching point (120, 130, 140) of the conductor track into at least two second conductor track sections (112, ..., 115) which run to a second side (102) of the chip,
- adhesively bonding an optical waveguide section (11) of a first optical waveguide (10) onto the first conductor track section (111) of the conductor track (110) at the first side (101) of the chip, wherein the optical waveguide section (11) of the first optical waveguide is not arranged on a carrier substrate (50) after the adhesive bonding, and/or
- adhesively bonding a number of respective optical waveguide sections (21a, ..., 21d) of second optical waveguides (20a, ..., 20d) onto in each case one of the second conductor track sections at the second side (102) of the chip, wherein the optical waveguide sections (21a, ..., 21d) of the second optical waveguides are adhesively bonded in a manner not supported by a carrier substrate (50),
- arranging a glass plate (210) under the respective optical waveguide sections of the optical waveguides after adhesively bonding the respective optical waveguide sections (11, 21a, ..., 21d) of the optical waveguides onto the respective conductor track sections (111, 112, ..., 115) of the conductor track, wherein the glass plate (210) has a cutout (212) at an end surface (211), and the glass plate (210) is adhesively bonded onto the first and/or second side (101, 102) of the chip such that the adhesive material (300) is arranged in said cutout of the glass plate.

2. The method as claimed in claim 1, comprising:
- adhesively bonding respective end surfaces (12, 22) of the optical waveguide sections of the first optical waveguide (10) and/or of the second optical waveguides (20a, ..., 20d) by means of an adhesive material (300) onto the respective conductor track sections (111, 112, ..., 115) of the conductor track (110) at the first and/or second side (101, 102) of the chip,
- applying a first layer (310) of the adhesive material laterally with respect to the respective end surfaces (12, 22) of the optical waveguide sections at the first and/or second side of the chip,
- applying a second layer (320) of the adhesive material over the first layer (310).

3. The method as claimed in claim 2,
wherein a layer containing an acrylate (310) or an epoxid (310) is applied as first layer of the adhesive material.

4. The method as claimed in one of the claims 2 or 3, wherein a layer having a lower coefficient of thermal expansion than the first layer (310) is applied as second layer (320) of the adhesive material.

5. The method as claimed in claim 4,
wherein a glass-filled adhesive material (320) is applied as second layer.

6. The method as claimed in one of claims 1 to 5, comprising:
cutting the respective optical waveguide sections (11, 21a, ..., 21d) of the optical waveguides at an angle of less than 15°.

7. The method as claimed in one of claims 1 to 6, comprising:
arranging another glass plate (220) over the respective optical waveguide sections of the optical waveguides after adhesively bonding the respective optical waveguide sections (11, 21a, ..., 21d) of the optical waveguides onto the respective conductor track sections of the conductor track, wherein the other glass plate (220) is adhesively bonded onto the first and/or second side (101, 102) of the chip, wherein the other glass plate (220) has a cutout (222) at an end surface (221), and the other glass plate (220) is adhesively bonded onto the first and/or second side (101, 102) of the chip such that the adhesive material (300) is arranged in said cutout of the other glass plate.

8. An optical splitter, comprising:
- a chip (100) containing a carrier substrate (S1), on which is arranged at least one optical conductor track (110) comprising a plurality of conductor track sections (111, 112, ..., 115), wherein a first one of the conductor track sections (111) branches from a side (101) of the chip at at least one branching point (120, 130, 140) of the conductor track into at least two second conductor track sections (112, ..., 115) which run to a second side (102) of the chip,
- wherein an optical waveguide section (11) of a first optical waveguide (10) is adhesively bonded onto the first conductor track section (111) of the conductor track (110) at the first side (101) of the chip, and/or wherein a number of respective optical waveguide sections (21a, ..., 21d) of second optical waveguides (20a, ..., 20d) are adhesively bonded onto the conductor track sections (112, ..., 115) at the second side (102) of the chip,
- wherein a glass plate (210) is adhesively bonded onto the first and/or second side (101, 102) of the chip (100) by an adhesive material (300), said glass plate being arranged under the respective optical waveguide sections (11, 21a, ..., 21d) of the first optical waveguide and/or of the second optical waveguides,
- wherein the glass plate (210) has a cutout (212) at its end surface (211) at which it is adhesively bonded onto the first and/or second side of the chip,
- wherein the adhesive material (300) is arranged in the cutout (212) of the glass plate.

9. The optical splitter as claimed in claim 8, wherein another glass plate (220) is adhesively bonded onto the first and/or second side (101, 102) of the chip, said other glass plate being arranged over the respective optical waveguide sections (11, 21a, ..., 21d) of the first optical waveguide and/or of the second optical waveguides.

10. The optical splitter as claimed in claim 9,
- wherein the other glass plate (220) in each case has a cutout (222) at its end surface (221) at which it is adhesively bonded onto the first and/or second side of the chip,
- wherein the adhesive material (300) is arranged in the cutout (222) of the other glass plate.

11. The optical splitter as claimed in one of claims 9 or 10,
wherein a surface at the first and/or second side (101, 102) of the chip (100) and the first and/or second glass plate (210, 220) have an inclination of less than 15°.

12. The optical splitter as claimed in one of claims 8 to 11,
- wherein a first layer (310) of an adhesive material is arranged at respective end surfaces (12, 22) of the optical waveguide sections (11, 21a, .., 21d),
- wherein the first layer (310) of the adhesive material is arranged laterally with respect to the respective end surfaces (12, 22),
- wherein a second layer (320) of the adhesive material is arranged over the first layer (310) of the adhesive material,
- wherein the second layer (320) of the adhesive material has a lower coefficient of thermal expansion than the first layer (310).

13. The optical splitter as claimed in claim 12, wherein the first layer of the adhesive material contains an acrylate (310) or an epoxid (310).

14. The optical splitter as claimed in one of the claims 12 or 13,
wherein the adhesive material of the second layer (320) is filled with glass.

15. The optical splitter as claimed in one of claims 8 to 14,
wherein a surface at the first and/or second side (101, 102) of the chip and the respective end surfaces of the optical waveguide sections have an inclination of less than 15°.

## Revendications

1. Procédé pour fabriquer un diviseur optique, comprenant les étapes suivantes :
- la mise à disposition d'une puce (100) avec un substrat support (S1), sur lequel est disposée au moins une piste conductrice optique (110) comportant plusieurs segments de piste conductrice (111, 112, ..., 115), sachant qu'un premier des segments de piste conductrice (111) se divise depuis un premier côté (101) de la puce à au moins un point de division (120, 130, 140) de la piste conductrice en au moins deux seconds segments de piste conductrice (112, ..., 115) s'étendant vers un second côté de la puce (102),
- le collage d'un segment de guide d'ondes optique (11) d'un premier guide d'ondes optique (10) au premier segment de piste conductrice (111) de la piste conductrice (110) sur le premier côté (101) de la puce, sachant que le segment de guide d'ondes optique (11) du premier guide d'ondes optique n'est pas disposé sur un substrat support (50) après le collage et/ou
- le collage d'un certain nombre de segments de guides d'ondes optiques respectifs (21a, ..., 21d) de seconds guides d'ondes optiques (20a, ..., 20d) à respectivement un des seconds segments de piste conductrice sur le second côté (102) de la puce, sachant que les segments de guides d'ondes optiques (21a, ..., 21d) du second guide d'ondes optique ne sont pas disposés sur un substrat support après le collage,
- la disposition d'une plaque en verre (210) sous les différents segments de guides d'ondes optiques des guides d'ondes optiques après le collage des différents segments de guides d'ondes optiques (11, 21a, 21d) des guides d'ondes optiques aux différents segments de piste conductrice (111, 112, ..., 115) de la piste conductrice, sachant que la plaque de verre (210) présente un évidement (212) à une face frontale (211), la plaque en verre étant collée par la face frontale (211) au premier et/ou au deuxième côté (101, 102) de la puce de telle manière que la matière adhésive (300) soit disposée dans l'évidement de la plaque en verre.

2. Procédé selon la revendication 1, comprenant :
- le collage des différentes faces frontales (12, 22) des segments de guides d'ondes optiques du premier guide d'ondes optique (10) et/ou des seconds guides d'ondes optiques (20a, ..., 20d) au moyen d'une matière adhésive (300) aux différentes segments de piste conductrice (111, 112, ..., 115) de la piste conductrice (110) au premier et/ou au second côté (101, 102) de la puce,
- l'application d'une première couche (310) de la matière adhésive sur le côté des faces frontales (12, 22) des segments de guides d'ondes optiques sur le premier et/ou le second côté de la puce,
- l'application d'une seconde couche (320) de la matière adhésive sur la première couche (310).

3. Procédé selon la revendication 2,
sachant que la première couche de matière adhésive appliquée contient un acrylate (310) ou un époxy (310).

4. Procédé selon l'une des revendications 2 ou 3,
sachant que la seconde couche (320) de matière adhésive appliquée présente un coefficient de dilatation thermique inférieur à celui de la première couche (310).

5. Procédé selon la revendication 4,
sachant qu'une matière adhésive (320) à remplissage de verre est appliquée en tant que seconde couche.

6. Procédé selon l'une des revendications 1 à 5, comprenant :
l'incision des différents segments de guides d'ondes optiques (11, 21a, ..., 21d) des guides d'ondes optiques dans un angle inférieur à 15°.

7. Procédé selon l'une des revendications 1 à 6, comprenant :
la disposition d'une seconde plaque en verre (220) au-dessus des différents segments de guides d'ondes optiques du guide d'ondes optique après le collage des différents segments de guides d'ondes optiques (11, 21a, ..., 21d) des guides d'ondes optiques aux différents segments de pistes conductrices de la piste conductrice, sachant que la seconde plaque en verre (220) est collée sur le premier et/ou le second côté (101, 102) de la puce, sachant que la seconde plaque en verre (220) présente un évidement (222) à une face frontale (221) et que la seconde plaque en verre est collée par la face frontale (221) sur le premier et/ou le second côté (101, 102) de la puce de telle manière que la matière adhésive (300) soit disposée dans l'évidement de la seconde plaque en verre.

8. Diviseur optique, comportant :
- une puce (100) contenant un substrat support (S1) sur lequel est disposée au moins une piste conductrice optique (110), qui comporte plusieurs segments de piste conductrice (111, 112, ..., 115), sachant qu'un premier des segments de piste conductrice (111) se divise depuis un premier côté (101) de la puce à au moins un point de division (120, 130, 140) de la piste conductrice en au moins deux seconds segments de piste conductrice (112, ..., 115) s'étendant vers un second côté de la puce (102),
- sachant qu'un segment de guide d'ondes optique (11) d'un premier guide d'ondes optique (10) est collé au premier segment de piste conductrice (111) de la piste conductrice (110) sur le premier côté (101) de la puce, et/ou sachant qu'un certain nombre de segments de guides d'ondes optiques respectifs (21a, ...., 21d) de seconds guides d'ondes optiques (20a, ..., 20d) sont collés aux segments de pistes conductrices (112, ..., 115) sur le second côté (102) de la puce,
- **caractérisé en ce qu'**une plaque en verre (210) est collée sur le premier et/ou le second côté (101, 102) de la puce (100) au moyen d'une matière adhésive (300), qui est disposée sous les différents segments de guides d'ondes optiques (11, 21a, ..., 21d) du premier guide d'ondes optique et/ou des seconds guides d'ondes optiques,
- sachant que la plaque en verre (210) présente un évidement (212) sur sa face frontale (211), par laquelle elle est collée au premier et/ou au second côté de la puce,
- sachant que la matière adhésive (300) est disposée dans l'évidement (212) de la plaque en verre (210).

9. Diviseur optique selon la revendication 8,
sachant qu'une seconde plaque en verre (220) est collée sur le premier et/ou le second côté (101, 102) de la puce et qu'elle est disposée au-dessus des différents segments de guides d'ondes optiques (11, 21a, ..., 21d) du premier guide d'ondes optique et/ou des seconds guides d'ondes optiques.

10. Diviseur optique selon la revendication 9,
- sachant que la seconde plaque en verre (220) présente respectivement un évidement (222) sur sa face frontale (221), par laquelle elle est collée au premier et/ou au second côté de la puce,
- sachant que la matière adhésive (300) est disposée dans l'évidement (222) de la seconde plaque en verre.

11. Diviseur optique selon l'une des revendications 9 ou 10, sachant qu'une surface sur le premier et/ou le second côté (101, 102) de la puce (100) et la première et/ou la seconde plaque en verre (210, 220) présente une inclinaison de moins de 15°.

12. Diviseur optique selon l'une des revendications 8 à 11,
- sachant qu'une première couche (310) de la matière adhésive est disposée sur des faces frontales respectives (12, 22) des segments de guides d'ondes optiques (11, 21a, ..., 21d),
- sachant que la première couche (310) de la matière adhésive est disposée sur le côté des faces frontales respectives (12, 22),
- sachant qu'une seconde couche (320) de la matière adhésive est disposée sur la première couche (310) de la matière adhésive.
- sachant que la seconde couche de la matière adhésive présente un coefficient de dilatation thermique inférieur à celui de la première couche de matière adhésive.

13. Diviseur optique selon la revendication 12,
sachant que la première couche de la matière adhésive contient un acrylate (310) ou un époxy (310).

14. Diviseur optique selon l'une des revendications 12 ou 13, sachant que la matière adhésive de la seconde couche (320) est remplie de verre.

15. Diviseur optique selon l'une des revendications 8 à 14, sachant qu'une surface sur le premier et/ou le second côté (101, 102) de la puce et la première et/ou les faces frontales respectives des segments de guides d'ondes optiques présentent une inclinaison de moins de 15°.
